# EUROPEAN PATENT SPECIFICATION

(11) **EP 0 813 795 B1**
(45) Date of publication and mention of the grant of the patent: **15.11.2000**
(21) Application number: 95914682.0
(22) Date of filing: 03.03.1995
(51) Int. Cl.: H04N 7/18

(54) **IMAGING DEVICE**
BILDAUFNAHMEVORRICHTUNG
DISPOSITIF D'OBSERVATION VISUELLE ET SYSTEME LE CONTENANT

(43) Date of publication of application: 29.12.1997
(73) Proprietor: Sightline Technologies Ltd., 31000 Haifa (IL)
(72) Inventor: OZ, Dan, 40500 Even Yehuda (IL)
(74) Representative: Jackson, Robert Patrick
(86) International application number: US9502663
(87) International publication number: WO9627991

(56) References cited:
- DE-A- 2 736 102
- GB-A- 2 231 231
- US-A- 5 079 629
- US-A- 5 301 061

## Description

### BACKGROUND OF THE INVENTION

The present invention relates to an optical viewing device and also a system including such a device.

Optical viewing devices are used in many diverse applications, such as in medical (e.g. gynecological, rectal, throat, dental) examinations, automobile inspections, etc. Many such applications require viewing areas to be examined which are difficult or extremely awkward to view.

US 5,079,629 discloses an optical viewing device comprising a casing including a focusing lens and an image sensor for receiving an optical image from the focusing lens and for transforming the image into electric signals. The casing includes a socket at one end for application to a person's finger. The focusing lens is mounted at the opposite end of the casing, for focusing images in the region in front of the focusing lens on the image sensor. The casing also includes substantially all the electronic circuitry required to control the image sensor and generate a video signal of the optical image.

### SUMMARY OF THE INVENTION

The fact that in accordance with U.S. 5,079,629 one and the same casing serves both for accommodating the optics and electronics and also for receiving the operator's finger proved to be impractical.

It is the object of the present invention to provide a device of the kind specified having improved properties over the one of U.S. 5,079,629 and providing various additional features enhancements and variations thereof.

The present invention provides an optical viewing device adapted for mounting on a user's finger, comprising a tubular camera casing having a front end and a rear end and including near its front end an image sensor for transforming optical images to electric signals, optics for focusing on to the image sensor and filtering optical images acquired from objects located in a region in front of the optics, and a sleeve with an open rear end, providing a socket for the user's finger, which socket is sealed off from said optics and the image sensor characterised by said sleeve being detachably connectable to the rear end of said tubular camera casing.

According to a preferred embodiment of the invention the sleeve has an open front end and is detachably connected to said tubular camera casing by means of a connector member engaging the rear end of said tubular camera casing and the front end of said sleeve.

According to a further embodiment of the invention said connector member serves also for sealing said tubular camera off from said sleeve.

By one embodiment of the invention, the connector member is integral with said camera casing. In another embodiment, the connector member is integral with said sleeve. In yet another embodiment of the invention, the connector member is detachable from both the casing and sleeve.

According to any of the above embodiments, the connector member may be short and the length of the device is essentially the sum total of the lengths of the casing and sleeve. Alternatively, the connector may be elongated and serve for elongating the device whereby the reach of the operator's finger is extended.

If desired, the front end of the casing curries a translucent dome designed to prevent any flexible walls of a cavity under examination from collapsing in front of the optics and light source, thereby preventing a good focused view of the space in front of the optics.

According to a preferred embodiment, the device according to the invention is fitted with a cap including a protective elastomeric sheath covering the side walls of the device and fitting tightly over a portion of the user's finger, thereby securing the sleeve to the finger and the front end of the casing. By one embodiment, the sheath comprises a translucent tip, which does not diminish the brightness of images transported to the image sensor.

In an alternative embodiment of the present invention, the aforementioned cap includes an open-ended sleeve sheath fitting tightly on the device and the user's finger.

According to still features, the device according to the invention includes means for attaching an accessory tool, such as a thermometer, a suction tube, an electrocautery electrode, a fiber optic cable, electrical contact probe or any other tool which may be useful in a particular situation, for example during medical examination, surgical procedure or automobile inspection.

In accordance with a preferred embodiment of the present invention, the focusing optics includes a first converging lens, an iris, a second converging lens, an optical low-pass filter and an infrared reject filter. These optical components provide an optical transport path for optical images in the region in front of the first lens to the image sensor. The optics are arranged within the casing such that incident light rays normal to the first lens are angularly offset from the normal to the end surface of the casing. This angular offset is provided so that when the user's finger is rotated a larger circumferential space in front of the optics can be effectively imaged without having to bend or displace the finger, which may be impossible to do in extremely narrow cavities.

The optical viewing system of the present invention includes the aforementioned optical viewing device, a separate camera control unit, wire-linked to the device, and a remotely located monitor. The camera control unit includes power means and a camera scan and control circuit which controls the image sensor within the optical viewing device, receives electric signals from the image sensor, and generates a video signal for transmission to the remotely located monitor that displays optical images.

It can thus be shown that a viewing device constructed in accordance with the foregoing features extends the user's eyes as it were to the user's fingertips, thus allowing the user to see and operate on otherwise obscure places wherever the user's finger can be inserted and manipulated. For example, the user's finger can he inserted into relatively small openings or spaces and manipulated so as to direct the focusing optics to any particular area desired to be viewed) whereupon the same finger may be utilized to direct and operate an accessory tool. In medical applications, such a viewing device provides many advantages over conventional instruments (e.g. endoscopes), in that it can be easily and precisely controlled as easy as one controls the finger to which the device is attached. Additional features described herein enhance the utility of the optical viewing device and viewing system.

Further features and advantages of the invention will be apparent from the description below.

### BRIEF DESCRIPTION OF THE DRAWINGS

The invention is herein described, by way of example only, with reference to the accompanying drawings, in which:
**Fig. 1** is a longitudinal sectional view illustrating one form of a viewing device according to the present invention;
**Fig. 2** is a longitudinal sectional view of a camera casing in a preferred embodiment of the present invention;
**Fig. 3** is a cross-sectional illustration of a ring-cap including an elastomeric sheath used for covering the optical viewing device;
**Fig. 4** illustrates the elastomeric sheath of Fig. 3 when applied on to a user's finger;
**Fig. 5** is a block diagram of the electric circuit components of an optical viewing system according to the invention;
**Fig. 6** is an illustration of the viewing device having its front end covered by a translucent dome in accordance with a preferred feature of the present invention;
**Fig. 7** shows the optical viewing device fitted with extension means, in accordance with a preferred feature of the present invention; and
**Fig. 8** is an illustration of the optical viewing device constructed with means for attaching an accessory tool in accordance with an alternative preferred embodiment of the present invention.

### DETAILED DESCRIPTION OF PREFERRED EMBODIMENTS

The optical viewing system of the present invention comprises three main units:
finger-mounted optical viewing device for probing a region of the body or other entity which produces a pre-video electric signal representative of the probed region;
a separate camera control unit carried by the user and linked by wire to the image sensor, including electronic circuitry for control thereof which produces a video signal from the pre-video signal; and
a video monitor for receiving and displaying the video signal produced by the control unit.

In the following description, the term "thimblescope" is used for a finger-mounted viewing device as a separate unit and the term "thimblecam" relers to the optical viewing system as a whole.

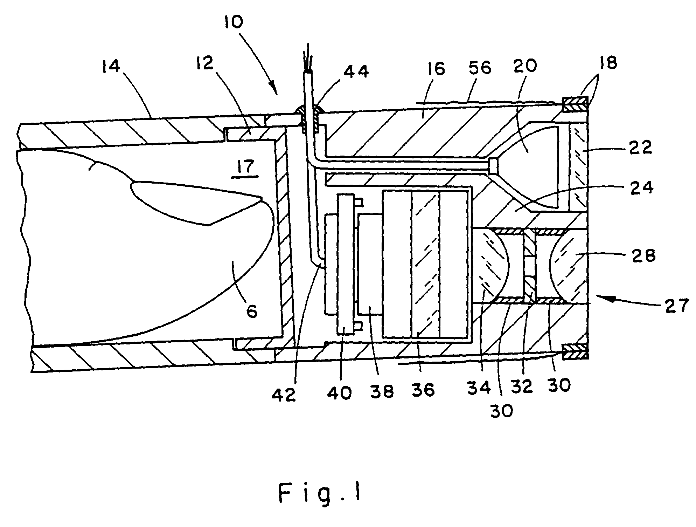

Fig. 1 shows the finger-mounted optical viewing device 10, alternatively referred to as a "thimblescope", comprising a tubular camera casing 16 carrying camera components therein. The front end of camera casing 16 carries optics, generally marked 27, for focusing and filtering optical images of the space in front of the optics on to a planar image sensor 38 mounted to a printed circuit board 40 secured within casing 16. The optics provide an optical transfer path by preferably utilizing a converging lens 28, spacer 30, an iris 32, additional spacer 30, a converging lens 34 and an optical filter 36 which preferably comprises an optical low-pass filter and an infrared reject filter. It will be appreciated that the present invention may utilize other optical arrangements, as known *per se* in the art, for focusing and filtering optical images in the aforementioned manner.

The front end of camera casing 16 further carries a light source 20 to the side of the focusing optics. Light source 20 is adapted to illuminate, through a light diffuser 22, the space to be imaged in front of the optics. Preferably, the light source 20 is a subminiature halogen light bulb, such as *"T-1"*, 2.5 Volt halogen lamp commercially available from Welch Allyn Ltd. of Skaneateles Falls, New York.

In an alternative embodiment of the present invention, light source 20 is a fiberoptic cable connected to a remote light source and adapted to provide suitable illumination.

The casing 16 is mounted on a user's finger 6 by means of a preferably rigid or alternatively semi-rigid, tubular sleeve 14 and is connected to the casing by means of a cup-shaped connector member 12 whose skirt fits snugly into an inner circumferential recess of sleeve 14 and whose web fits snugly into the open rear end of casing 16, thereby serving as closure of the casing and defining a socket 17 for the user's finger. When unsealing the casing 16, its components within are readily accessed, e.g. for maintenance and repair. Preferably, sleeve 14 is interchangeable and a plurality of sleeves sized to fit various finger sizes are provided with the thimblescope. Casing 16, cap 12 and sleeve 14 are preferably formed from a non-rustable metal and formed to fit snugly into one another, as described above, so as to substantially prevent slippage and in order to be hermetically sealed for immersion into a disinfectant fluid, such as cidex, as is the usual procedure prior to inserting the thimblescope into an orifice of the human body.

The printed circuit board 40 carries, as described further below, certain circuit components which are connected to a camera control unit via a cable 42 which protrudes through an opening 44 in the wall of casing 16.

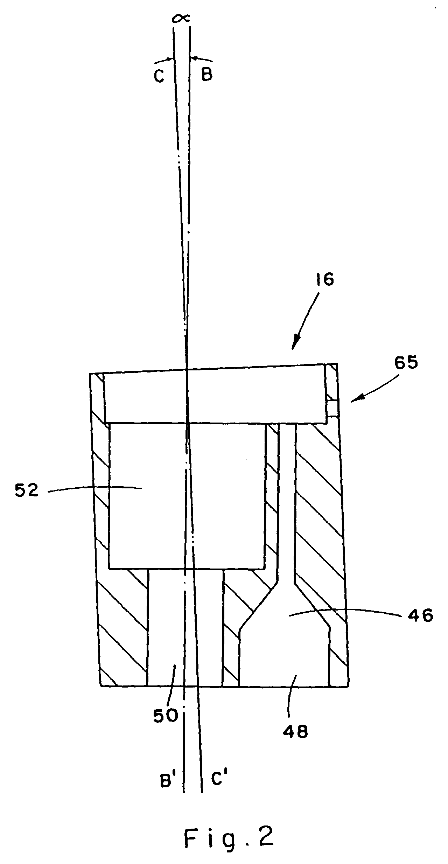

Referring further to Fig. 2, the preferred design of the camera casing 16 is shown more clearly in a longitudinal sectional view. Casing 16 comprises a plurality of cavities including a lamp cavity 46 wherein the light source 20 is situated, a diffusion cavity 48 wherein light diffuser 22 is situated, a lens cavity 50 wherein the focusing optics are situated and a main cavity 52 wherein the optical filter 36, image sensor 38 and printed circuit board 40 are situated.

As shown in Fig. 2, the cavities within casing 16 are angled somewhat, i.e. the cavities are oriented such that axis B-B' of cavities 50 and 52 is offset by a few degrees, typically 15° from an axis C-C' of casing 16. This angular offset is provided so that when finger 6 is rotated, a larger circumferential space in front of the optics can be effectively scanned without having to displace or bend the finger, which may be impossible to do in certain situations, e.g. in extremely narrow cavities of the human body.

Referring again to Fig.1, it should be added, that casing 16 is preferably cylindrically shaped throughout its length, and preferably has at its front end a terminal portion of a slightly smaller diameter whereby a circumferential shoulder is formed on which is fitted a cap comprising an annular member 18 holding an elastomeric sheath 56 that fits over the front and side walls of the thimblescope and on to the user's finger, preventing slippage and, when in place, acting on the one hand as a hygienic barrier which prevents any contaminants residing on the thimblescope from entering a sensitive body, e.g. a human body, and on the other hand preventing the thimblescope from being soiled by the body, e.g. by body fluids.

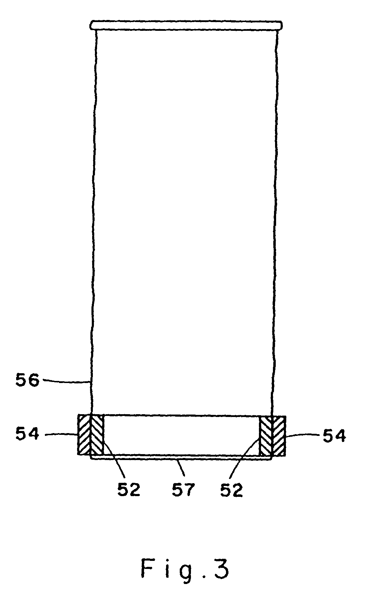

Fig. 3 shows the sheath 56 in greater detail. As shown, annular member 18 comprises a first, inner ring 52 situated inside the elastomeric sheath 56 which is in form of a flexible sleeve open at one end and closed at the opposite end, such that the closed end 57 of the sheath, i.e. the tip, is tautly stretched over ring 52 and secured thereon by glue or the like. The ring with the overlying sheath tip is mounted to the inner side of a second, outer ring 54. At least the tautly stretched sleeve tip 57 spanning the open center of ring-cap 18 is translucent in order not to affect the brightness of optical images focused on to the image sensor 38, as described below.

Preferably, for delivery to the consumer, the sheath 56 is purchased in a rolled-up state. Additionally, the elastomeric sheath 56 may be lubricated on its outer surface, if desired, to decrease any friction associated with inserting the thimblescope into narrow orifices, e.g. the rectum.

In an alternative embodiment of the present invention, the thimblescope 10 may be secured to the finger 6 by an open-ended sleeve-like elastomeric sheath.

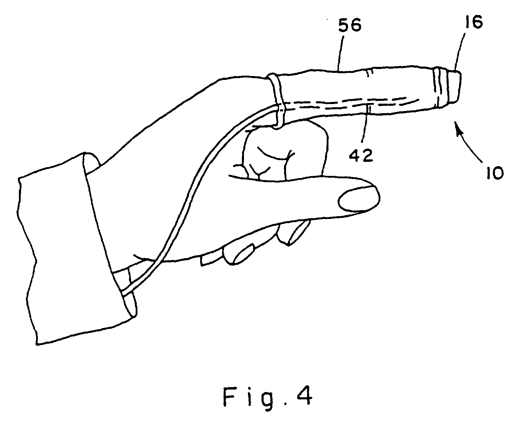

Fig. 4 depicts sheath 56 of the preferred embodiment of the present invention when fitted over casing 16, cable 42, sleeve 14 and a portion of finger 6. The translucent portion of the sheath 56 covers the front end of casing 16. The elastomeric sheath 56 firmly grips the user's finger, thereby providing compressive pressure to prevent the thimblescope from sliding off finger 6. The elastomeric sheath 56 is a low cost, disposable item and hence a new sheath can be applied each time the thimblescope is used.

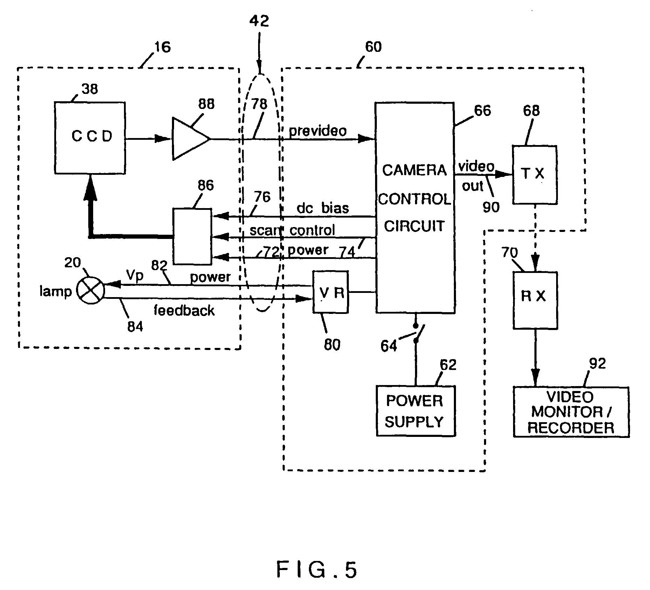

Fig. 5 is a block diagram of the electrical components of the optical viewing system. A camera control unit 60 comprises a power supply 62 and switching means 64 thereof, for powering a camera scan and control circuit 66 which controls the image sensor 38 and produces a video signal from electric signals received therefrom. The power supply 62 is preferably a power mains or, alternatively, a rechargeable battery including a conventional charging system as known *per se* in the prior art. Preferably, the camera control unit 60 comprises the camera scan and control circuit 66, power supply 62 and optionally a transmitter 68, such as an RF, IR or other EM carrier wave transmitter, are all housed, in a casing (not shown), e.g. similar to a portable cassette player commonly referred to as a "Walkman", which can be easily carried by the user, e.g. in a pocket or by clipping the unit on to a belt.

The camera control unit 60 further carries a voltage regulator 80 which controls the amount of power supplied to the light source 20.

The camera control unit 60 is linked to the interior of casing 16 via cable 42 which carries, through separate wires, power, control and data signals that connect to electronic circuit components, including the image sensor 38, contained within casing 16. The complete a voltage feedback path associated with a voltage regulator 80, a sense wire 84 connects the light source 20 and the voltage regulator 80, which provides, as known *per se* in the art) a predetermined voltage to the light source via wire 82.

The camera scan and control circuit 66 is connected to image sensor 38 by power line 72, scan control signals 74 and DC bias signals 76 that connect to interface circuitry 86 which, in turn, interfaces with the image sensor 38. The interface circuitry is generally unique to the specific type of image sensor used and is usually specified in product literature provided by the manufacturer of the image sensor 38.

The image sensor 38 receives the optic image focused on to it by the optics (Fig. 1), and transforms the optical image into pre-video electric signals. Preferably, the image sensor 38 is a charge-coupled device (CCD) as commonly used in solid state television cameras, e.g. a SONY ICX059-AKB CCD integrated circuit commercially available from SONY Corp. of Japan. The pre-video output of the image sensor 38 is connected to an input of a buffer/amplifier 88 which boosts the power of the pre-video signal for transmission along a wire 78 to a pre-video input of camera scan and control circuit 66. The camera scan and control circuit 66 produces a video signal 90 that is transmitted to a video monitor 92 which displays the image sensed by the image sensor 38 and, if desired, also records the video signals for later examination and/or processing. The video signal 90 transmits to the monitor 92 via a video cable (not shown) or, if desired, through a space link as known *per se* in the art, utilizing the conventional transmitter 68 located on the camera control unit 60 and a receiver 70 connected to the video monitor 92.

The manner of using the optical viewing system illustrated in Figs. 1-5 will be apparent from the above description. Thus, the thimble-scope 10 may be applied by inserting the user's finger, e.g. the index finger, into sleeve 14 which, as described above, is attached to camera casing 16 containing the image sensor 38. If required, the ring-cap 18 is then placed over the front portion of camera casing 16 and the associated elastomeric sheath 56 is unrolled over the thimblescope, i.e. casing 16 and sleeve 14, and further over finger 6. Provided the elastomeric sheath fits tightly over the finger, the thimblescope 10 may then be inserted into the space to be viewed and manipulated as desired, by moving or rotating the finger so as to view, by bringing into focus, any space of interest in front of the focusing optics. The system ON/OFF switch is preferably located in the control unit casing and may be activated as desired. Additionally, if the ambient light is insufficient, the artificial light source 20 may be activated by switching means located on the control unit casing. Hence, the thimblescope 10 is particularly advantageous for viewing normally hard-to-reach spaces, and is easily manipulated for viewing desired spaces by the very natural means of moving and/or rotating one's finger.

A number of additional features may be combined with the basic thimblescope design as described above.

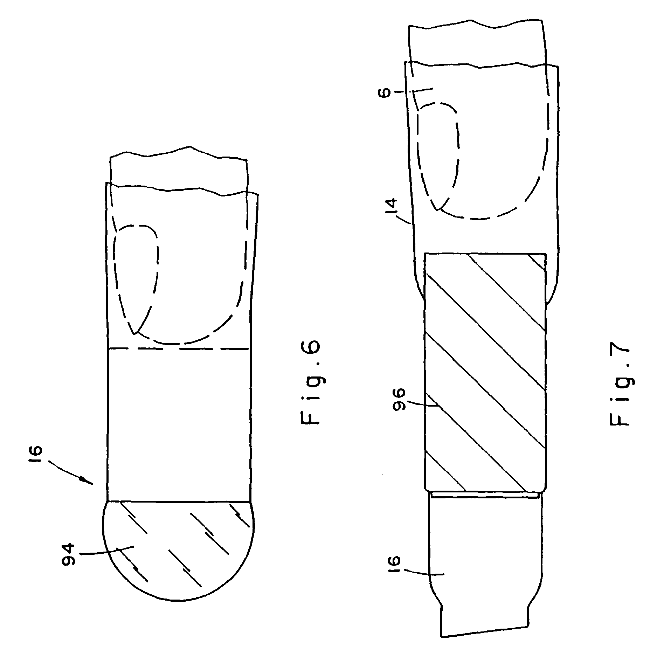

Fig. 6 depicts the front end of camera casing 16 (where the optics are located) covered by a translucent dome 94. When the thimblescope is inserted into a narrow orifice of the human body, e.g. the rectum, or any other cavity having flexible internal walls, such as organ tissues will tend to collapse in front of thimblescope's optics and thereby prevent a good, focused view of the space in front of the device, particularly when the optics' minimum focusing distance is greater than zero, i.e. further away than the surface of the thimblescope. The dome 94 alleviates this problem as it is suitably sized to allow the image sensor 38 to receive a focused image of the space at the surface of the dome.

The thimblescope may also be fitted with a plurality of accessories which enhance its effectiveness.

Fig. 7 shows that the thimblescope 10 may also be fitted with extension means, such as an extension member 96, thereby extending the reach of the user's finger, hence allowing the thimblescope 10 to reach spaces otherwise inaccessible due to the inability to insert one's hand into a narrow orifice and the relatively short reach of the user's finger. Extension member 96 may be rigid, semi-rigid or flexible, as the case may be, depending on the desired application of the thimblescope. In this particular embodiment the extension member 96 serves as the connector member.

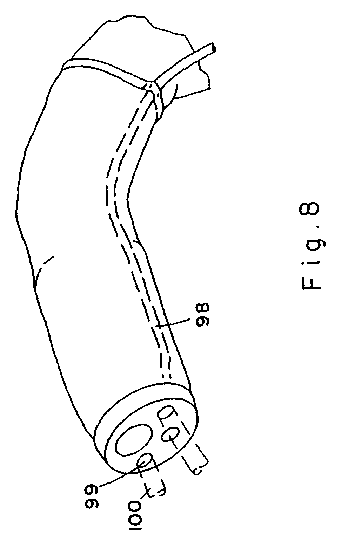

Fig. 8 shows the thimblescope 10 constructed with means for attaching an accessory tool, such as additional passageways 98 and 99 formed within camera casing 16, one of which receives a vacuum suction tube 100 such as the kind conventionally used during surgery to remove fluid and/or gaseous matter from a particular portion of the body. The thimblescope 10 may be fitted with a number of accessory tools) which may be particularly advantageous for medical examination and/or surgery, including, but not limited to:
- an electrocautery electrode;
- scissors, biopsy forceps or arm thereof, and the like;
- a surgical air or gas pressure hose;
- a thermometer;
- a microphone;
- a mirror for viewing space laterally displaced from the thimblescope; and
- a surgical laser beam transmitter or transmission means thereof, such as a fiberoptic cable.

A gas pressure hose, as conventionally used with endoscopes, may be used in conjunction with the thimblescope according to the invention for pushing, by means of gas flow, any collapsing orifice walls, as mentioned above, away from the thimblescope thereby providing an unobstructed view of the space thereinfront.

## Claims

1. An optical viewing device (10) adapted for mounting on a user's finger, comprising a tubular camera casing (16) having a front end and a rear end and including near its front end an image sensor (38) for transforming optical images to electric signals, optics (27) for focusing on to the image sensor and filtering optical images acquired from objects located in a region in front of the optics, and a sleeve (14) with an open rear end, providing a socket (17) for the user's finger, which socket is sealed off from said optics and the image sensor characterised by said sleeve being detachably connectable to the rear end of said tubular camera casing.

2. An optical viewing device as claimed in claim 1, wherein a cable is connected to at least said image sensor for transmitting said electric signals and said casing includes an aperture through which said cable passes such that it overlies the user's finger on application of the device thereto.

3. An optical viewing device as claimed in claim 1 or 2 wherein the sleeve is of at least sufficient length to extend in use to the first knuckle of the user's finger when the finger is inserted in the socket.

4. An optical viewing device according to claim 1, 2 or 3, further comprising an intermediate extension member (96) interdisposable between said casing and said sleeve.

5. An optical viewing device according to claim 4 wherein said intermediate extension member is manipulatable to a desired configuration.

6. An optical viewing device according to any preceding claim, wherein optical axis (B-B') of the optics (27) subtends a small acute angle with respect to the longitudinal axis (C-C') defined by the tubular casing (16).

7. An optical viewing device according to claim 6 wherein said small acute angle is about 15°.

## Patentansprüche

1. Optische Beobachtungsvorrichtung (10), welche zur Anbringung an einem Finger eines Benutzers ausgebildet ist, umfassend ein rohrartiges Kameragehäuse (16) mit einem vorderen Ende und einem hinteren Ende und nahe seines vorderen Endes mit einem Bildsensor (38), um optische Bilder in elektrische Signale umzuwandeln, und einer Optik (27), um von Objekten, die in einem Bereich vor der Optik liegen, gewonnene optische Bilder auf den Bildsensor zu fokussieren und zu filtern,
**gekennzeichnet durch** die Vorsehung einer Hülse (14) mit einem offenen hinteren Ende, wobei die Hülse lösbar mit dem hinteren Ende des rohrartigen Kameragehäuses verbindbar ist und einen Aufnahmeraum (17) für den Finger des Benutzers bereitstellt, welcher Aufnahmeraum gegenüber der Optik und dem Bildsensor abgedichtet ist.

2. Optische Beobachtungsvorrichtung nach Anspruch 1, bei der ein Kabel zumindest mit dem Bildsensor verbunden ist, um die elektrischen Signale zu übertragen, und bei der das Gehäuse eine Öffnung aufweist, durch die das Kabel derart hindurchgeht, daß es über dem Finger des Benutzers liegt, wenn die Vorrichtung an diesem angebracht ist.

3. Optische Beobachtungsvorrichtung nach Anspruch 1 oder 2, bei der die Hülse zumindest ausreichend lang ist, um sich im Gebrauch bis zum ersten Gelenk des Fingers des Benutzers zu erstrecken, wenn der Finger in den Aufnahmeraum gesteckt ist.

4. Optische Beobachtungsvorrichtung nach Anspruch 1, 2 oder 3, ferner umfassend ein Verlängerungszwischenstück (96), welches zwischen das Gehäuse und die Hülse setzbar ist.

5. Optische Beobachtungsvorrichtung nach Anspruch 4, bei der das Verlängerungszwischenstück in eine gewünschte Form bringbar ist.

6. Optische Beobachtungsvorrichtung nach einem der vorhergehenden Ansprüche, bei der eine optische Achse (B-B') der Optik (27) einen kleinen spitzen Winkel mit der von dem rohrartigen Gehäuse (16) gebildeten Längsachse (C-C') einschließt.

7. Optische Beobachtungsvorrichtung nach Anspruch 6, bei der der kleine spitze Winkel etwa 15° beträgt.

## Revendications

1. Dispositif d'observation optique (10) apte à être monté sur un doigt d'un utilisateur, comprenant un boîtier tubulaire (16) de caméra ayant une extrémité frontale et une extrémité arrière et comportant près de son extrémité frontale un détecteur (38) d'images pour transformer des images optiques en signaux électriques, et un système optique (27) pour focaliser sur le détecteur d'images et filtrer des images optiques acquises à partir d'objets situés dans une région en face du système optique, caractérisé par la présence d'un manchon (14) avec une extrémité arrière ouverte, ledit manchon pouvant être relié de manière amovible à l'extrémité arrière dudit boîtier tubulaire de caméra et fournissant un support (17) pour le doigt de l'utilisateur, ce support étant désolidarisé dudit système optique et du détecteur d'images.

2. Dispositif d'observation optique selon la revendication 1, caractérisé en ce qu'il comprend un câble connecté à au moins ledit détecteur d'images pour transmettre lesdits signaux électriques et ledit boîtier inclut une ouverture à travers de laquelle ledit câble passe de telle manière qu'il s'étend au-dessus du doigt de l'utilisateur lors de l'utilisation dudit dispositif.

3. Dispositif d'observation optique selon la revendication 1 ou 2, caractérisé en ce que le manchon est au moins de longueur suffisante pour s'étendre lors de l'usage jusqu'à la première articulation du doigt de l'utilisateur quand le doigt est inséré dans le support.

4. Dispositif d'observation optique selon la revendication 1, 2 ou 3, caractérisé en ce qu'il comprend en outre un organe (96) d'extension intermédiaire interposable entre ledit boîtier et ledit manchon.

5. Dispositif d'observation optique selon la revendication 4, caractérisé en ce que ledit organe d'extension intermédiaire est manipulable selon une configuration désirée.

6. Dispositif d'observation optique selon l'une quelconque des revendications précédentes, caractérisé en ce que l'axe optique (DD') du système optique (27) supporte un petit angle aigu par rapport à l'axe longitudinal (CC') défini par le boîtier tubulaire (16).

7. Dispositif d'observation optique selon la revendication 6, caractérisé en ce que ledit petit angle aigu est d'environ de 15°.
